Europäisches Patentamt

(19) European Patent Office

Office européen des brevets

(11) Publication number: **0 033 642**
A2

## (12) EUROPEAN PATENT APPLICATION

(21) Application number: **81300394.4**

(22) Date of filing: **30.01.81**

(51) Int. Cl.³: **A 47 J 37/08**

(30) Priority: **01.02.80 GB 8003526**

(43) Date of publication of application:
**12.08.81 Bulletin 81/32**

(84) Designated Contracting States:
**AT BE CH DE FR GB IT LI LU NL SE**

(71) Applicant: **Fourny, Denise Gisele Josette**
**42, Boulevard d'Italie**
**Monte Carlo(MC)**

(72) Inventor: **Jones, Clive Lynn**
**30 Bishopston Road**
**Bishopston Swansea Wales(GB)**

(72) Inventor: **Clausse, Georges Jean Louis-Marie**
**5 Nightingale Road West End**
**Esher Surrey(GB)**

(74) Representative: **Boydell, John Christopher**
**Stevens, Hewlett & Perkins 5 Quality Court Chancery Lane**
**London, WC2A 1HZ(GB)**

(54) Electric toaster.

(57) An electric toaster in which light from a light source 44 is directed onto an item to be cooked (not shown) by means of a first light guide 39. After reflection from the item, the reflected light passes down a light guide 38 to a light detector (not shown) at the bottom of the guide. A further light detector (not shown), which acts as a reference is positioned to receive light direct from the light source and an electronic control circuit (not shown ) containing the two light detectors is used to automatically inhibit the supply of current to the heating element 6 when cooking is judged to be complete.

Fig. 3

EP 0 033 642 A2

Croydon Printing Company Ltd.

- 1 -                    JCB/935

"ELECTRIC  TOASTERS"

The present invention relates to electric toasters.

In accordance with the invention, there is provided an electric toaster comprising at least one electric heating element, a switch device for controlling the current supply to the element or elements, a control circuit for controlling the switch device to switch off the heater current, a light source for illuminating an item being cooked, a first electronic light detector in the control circuit positioned so as to receive light from said source reflected from the item being cooked, and a second electronic light detector in the control circuit positioned so as to receive light directly from said source.

With this arrangement it is possible to provide for the first electronic light detector to respond to the light reflecting properties of the item so as to switch off the heating current when it achieves a certain appearance.  The major change in the appearance of food which takes place during cooking is a change in the colour.  However in application of the invention it is possibly not only the colour which affects the light detector but also perhaps the specular light reflecting property.  For example, toast, as it is being cooked, changes both in colour and texture and the first light detector may respond to the combined light reflecting properties.

The use of two light detectors arranged in the above manner enables two distinct methods of control to be used:  firstly the second light detector can be used in a feedback control circuit to control the output of the light source; secondly the outputs of the two light detectors can be compared, for example in a bridge circuit. In both cases, the use of the second, reference, detector enables variations in mains voltage and ageing of the light source to be compensated for.

The control circuit may comprise a trip mechanism effective to eject the item from the toaster. Such a trip mechanism may be activated directly by the control circuit or may operate as a result of the supply current being switched off. The trip mechanism might comprise, for example, a relay connected with its winding in series with the heating element or elements. The switch circuit may include a relay or may comprise an electronic switch such as a triac or thyristor. In a preferred embodiment of the invention the control circuit comprises a switching device connected in series with an electromagnet or electromagnets controlling a flap member which falls away to enable the cooked food to be removed. By this means, the current supply to the electromagnets is cut off when the item being cooked is ready and the electrical supply to the heating elements is cut off as the flap member falls away under the influence of gravity.

The first light detector is preferably relatively insensitive to infra-red light and preferably has its maximum response in the violet or ultra-violet region. In this way the light detector does not respond to the infra-red light from the heater. Alternately a filter may be employed in the light path to cut out infra-red light from the heater. The light source may be an incandescent bulb or a discharge tube, for example. The light source may also serve as an indicator lamp. The light detectors may comprise for example photoresistors, photodiodes, phototransistors or photovoltaic cells.

It may be necessary to include a non-reflecting baffle behind the item being cooked. Thus, when the item is removed no light will reach the light detector and the apparatus will not operate.

Preferably the control circuit is adjustable so that it may be set as desired to respond to a predetermined state of cooking. This is achieved by adjusting the comparison levels between the first and second light detectors.

It is desirable that the two light detectors are as near closely matched as possible. However, accurate matching of devices is expensive since it involves individual testing to ascertain the properties of the devices. Furthermore, it is not possible to easily take account of in service replacement of devices after failure. Thus, it is preferred to provide means whereby the output of one or both of the detectors may be adjustable to enable the circuit to be preset during manufacture or when one or both detectors are replaced. This may be achieved by means of pre-set potentiometers in the electrical output circuits of the detectors. Preferably, however, such means comprises a shutter which is positioned to shield the second (reference) detector from a portion of the light received from the light source. The position of the shutter is preset to take account of variations between devices and enables low tolerance, and hence cheaper, detectors to be used.

It is important that the light detectors are adequately protected from the heat generated by the element or elements and it is therefore preferable that the detectors are located at positions remote from the element or elements, light being directed from the item being cooked by means of light guides. Such light guides may comprise fibre optics or, preferably, a light tube in which the light is directed around corners by means of reflective surfaces in a similar manner to a periscope. In a preferred embodiment of the invention, the light tube extends from the first detector behind the element or one of said elements and is bent through a right angle to open immediately behind the element. An aperture is formed in the element at this point to enable light reflected off the item being cooked to pass down the tube to the first detector. Preferably the end of the tube adjacent the element is protected by a window, for example of transparent mica, which prevents foreign matter entering the tube. Such a window may be attached over the aperture in the element itself or, preferably is attached over the end of the light tube. This latter enables a more secure fixing to be made, so that the window is less liable to distortion during heating.

Power for the control circuit is supplied from the mains via a dropper resistor or capacitor. Such dropper resistor may comprise a separate power resistor or may comprise the light source in the form of an incandescent lamp. In an embodiment of the invention, however, the power supply for the control circuit comprises a tapping off the heating element or elements.   If the elements comprise a plurality of separate windings, as specified above, the power supply for the control circuit can be taken off one or more of said windings.

The mechanical construction of the toaster may take several forms.   In a preferred embodiment the toaster comprises a fixed member carrying a first electric radiant heating element, a flap member hinged with respect to the fixed member and carrying a second electric radiant heating element, said flap member being movable between a closed position in which the heating elements are substantially parallel to one another and define therebetween a space in which items to be toasted may be placed and an open position in which the heating elements are disposed at an angle to one another, and means for retaining the flap member in the closed position.

The closed position defines the toasting position, while the open position enables items to be safely inserted into and removed from the toaster.   The flap member may be moved between its positions by hand, movement from the closed to the open position being carried out at a time when the operator judges the item to be cooked.   Preferably, however, the movement from the closed to the open position is carried out automatically, either after a predetermined time set by a clock, or in response to said control circuit which detects the completeness of the cooking.

The elements may comprise any of the conventional planar elements of the type frequently used in electric toasters.   These generally comprise a sheet of insulating material, such as mica, which is capable of withstanding high temperatures, around which is wound resistance wire. The windings are preferably graduated, being tighter at the bottom, to ensure even heat distribution when the elements are mounted in a vertical plane. In an embodiment each element is made up of a plurality of separate windings wound on a single sheet of insulating material, and spaced apart from one another. The separate windings are electrically connected in series for connection across the mains supply. The use of separate elements avoids concentration of heat at certain parts of the element.

The retaining means may simply comprise the action of gravity, the toaster as a whole being oriented, in use, such that the hinged flap member rests on the fixed member. In this arrangement however, the elements necessarily lie in a horizontal plane which results in poor heat circulation. Preferably the elements lie in a vertical plane when the flap member is in the closed position. If the elements are vertical it will probably not be possible to rely on gravity to retain the flap element in the closed position, and some positive latching action is necessary. This may be achieved by means of a conventional mechanical latch which may be released by hand or automatically when the item is cooked. In an embodiment such a mechanical latch is operated by means of a conventional thermal relay comprising a bimetal strip and heating coil. The flap member is released at the completion of cooking by, for example, applying current to the heating coil which, after a short delay, causes the bimetal strip to unlatch the flap member which thence falls away by gravity. Alternatively the flap member may be released by cutting off the current from the heating coil, which is arranged to be normally energised during cooking.

In a further embodiment, the latching is achieved by virtue of the attraction between a magnet and a piece of ferromagnetic material or between two magnets. The magnet and ferromagnetic material or the two magnets are mounted in such a way as to be attracted to one another when the flap member is in the closed position, thereby retaining the flap member in that position. Thus in order to move the flap member to the open position, it is necessary to overcome the force of attraction. In a preferred embodiment of the invention, the magnet is an electro-magnet and the ferromagnetic material is such that it does not exhibit permanent magnetism. In this latter case, the flap member is released at the completion of cooking by cutting off the supply of current to the electromagnet. The current supply may be cut off manually or automatically. Preferably closure of the flap member automatically initiates the supply of current to the electromagnet so as to retain the flap member in the closed position. If required a plurality of electromagnets and respective associated pieces of ferromagnetic material may be provided for additional attractive force.

In a preferred embodiment of the invention, the flap member is hinged about a horizontal axis and is balanced so that it falls into said second position by gravity, and is latchable in said first position. Thus at the finish of cooking, the flap member is released, whereupon it drops away, allowing the item to be removed.

Preferably closure of the flap member automatically initiates a supply of current to the or each heating element and, conversely, opening of the flap member automatically cuts off the supply of current to the elements. In order to guard against accidental closure of the flap member when the toaster is empty, means may be provided for detecting the presence of an item to be toasted and for inhibiting latching of the flap member in the closed position if no item is present. Alternatively, the means for detecting the presence of an item to be toasted may act to prevent the supply of current to the elements if no item is present. In a still further alternative, the detecting means acts to inhibit latching and to prevent the supply of current to the elements. In order that the toaster may be stored in the closed position whilst not in use, or when packed, it is preferred to provide additional means for latching the flap member in the closed position, which additional means acts to overide the detecting means and thus allow latching even when no item is present within the toaster. Such additional latching means is manually actuable from outside the toaster, thus requiring deliberate action on the part of a user. Preferably, the actuation of said additional latching means to latch the flap member in the closed position also acts to inhibit supply of current to the elements. In one embodiment a combined double pole switch and latch is operated by a lever in the base of the toaster. The lever operates the switch which is situated in the base, while a linkage attached to the lever operates a mechanical latch near the top of the toaster, to hold the toaster closed for storage.

Unlike conventional "pop-up" type electric toasters, it is possible with the toaster of the present invention to ensure that, in the closed position of the flap member, the item to be toasted is securely held over substantially its whole surface so as to prevent the item curling up during toasting. Because of their method of operation, the item to be cooked in a "pop-up" toaster must necessarily be loosely held. In order to further enhance this feature, means may be provided for moving the flap member in a direction towards and away from the fixed member in order to accommodate different thicknesses of item to be toasted. This enables a much larger variety of items to be toasted by means of this toaster, the distance between the fixed member and flap member being adjusted as appropriate in each case to ensure that the item to be toasted is securely held as aforesaid. It has been found that such items as buns and sandwiches can be successfully toasted using this toaster, as well as relatively thin slices of bread. In a preferred embodiment of the invention the means for moving the flap member comprises a rack and pinion arrangement which is manually actuable from the exterior of the toaster. The rack is mounted on the fixed member, while the pinion is mounted on the flap member. Preferably two rack and pinions are provided, one adjacent each of two hinges providing the hinged connection between the fixed member and the flap member. The two pinions are mounted on a common shaft and are rotatable by means of respective knobs on the exterior of the toaster.

In a preferred embodiment of the invention, the toaster further includes a sub-assembly, which sub-assembly comprises two of said electromagnets, the shaft carrying the two pinions of said rack and pinion arrangements, and two pieces of ferromagnetic material which are mounted for pivotal movement about said shaft, each of said pieces co-operating with a respective one of said electromagnets to retain the pieces in a preferred pivotal position. The flap member is hinged by virtue of being pivoted about the shaft, and the pieces of ferromagnetic material are mounted on the flap member and so rotate therewith.

In order that the invention may be better understood an embodiment thereof will now be described by way of example only and with reference to the accompanying drawings in which:-

Figure 1 is a partially cut away perspective view of an electric toaster according to the present invention;

Figure 2 is a side elevation of the toaster of Figure 1, partially cut away to show the interior;

Figure 3 is a view similar to Figure 2 showing an alternative arrangement of light source and light tubes;

Figure 4 is a view along the lines IV - IV of Figure 2;

Figure 5 is a view along the lines V - V of Figure 2;

Figure 6 is a plan view along the lines VI - VI of Figure 2;

Figure 7 is a circuit diagram of a control circuit for use with the toaster of the present invention;

Figure 8 is a circuit diagram of an alternative control circuit for use with the toaster of the present invention; and

Figure 9 is a perspective view showing the method of attachment of the element and grille.

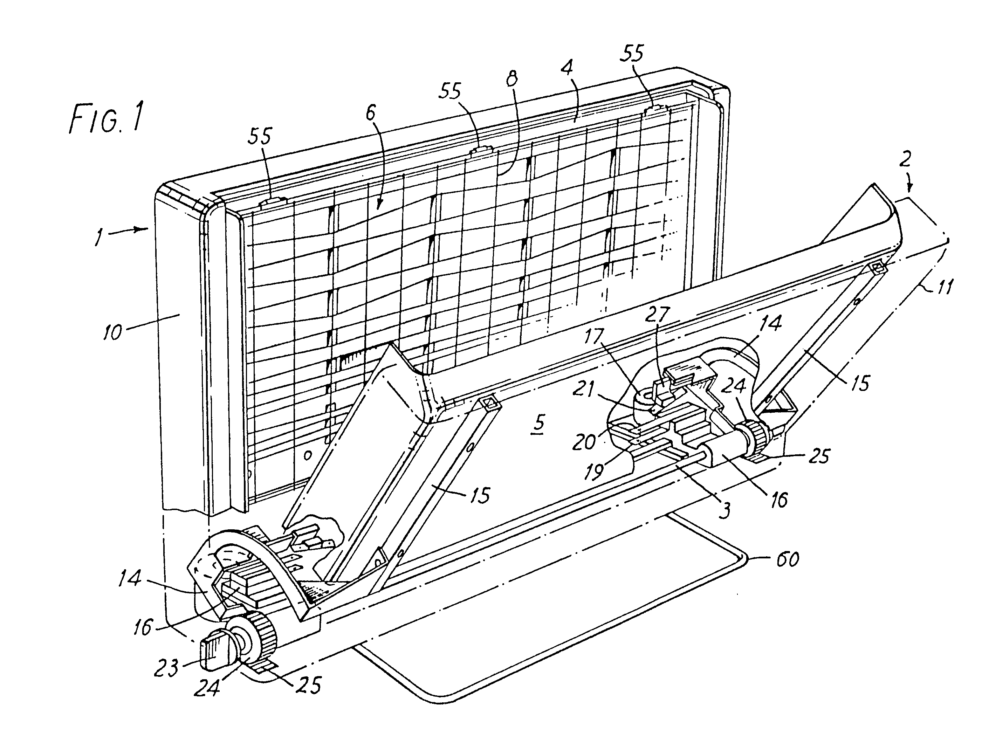

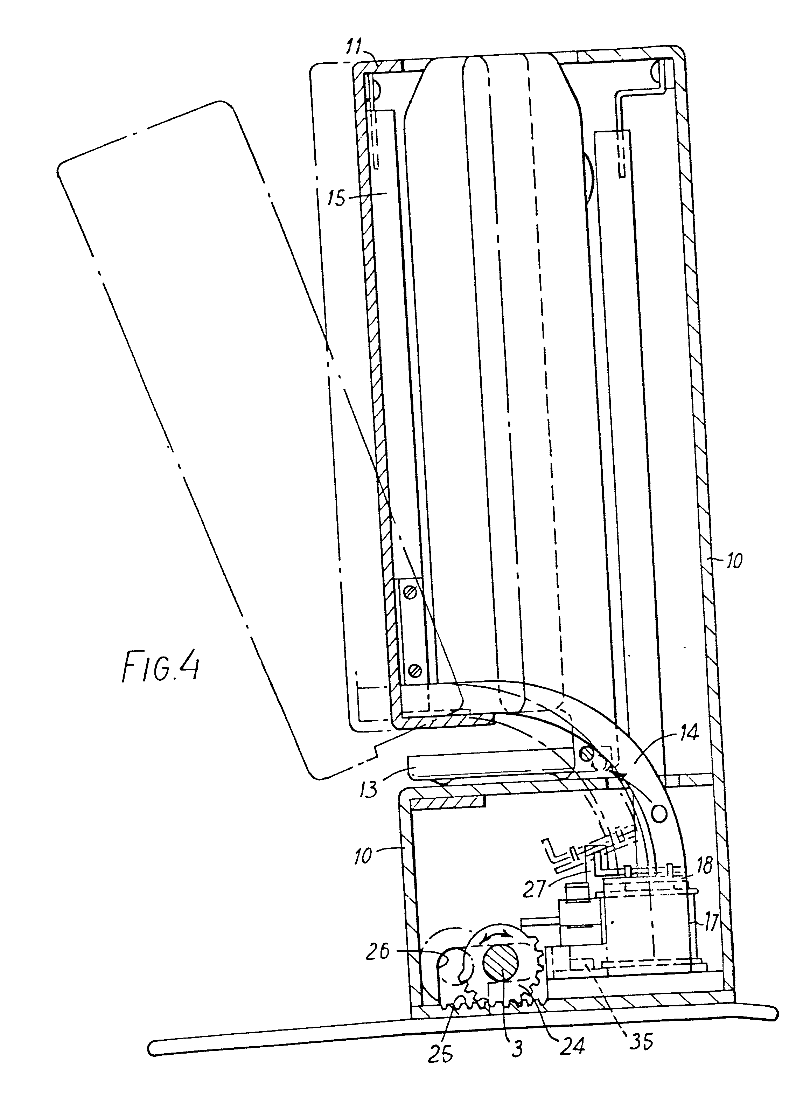

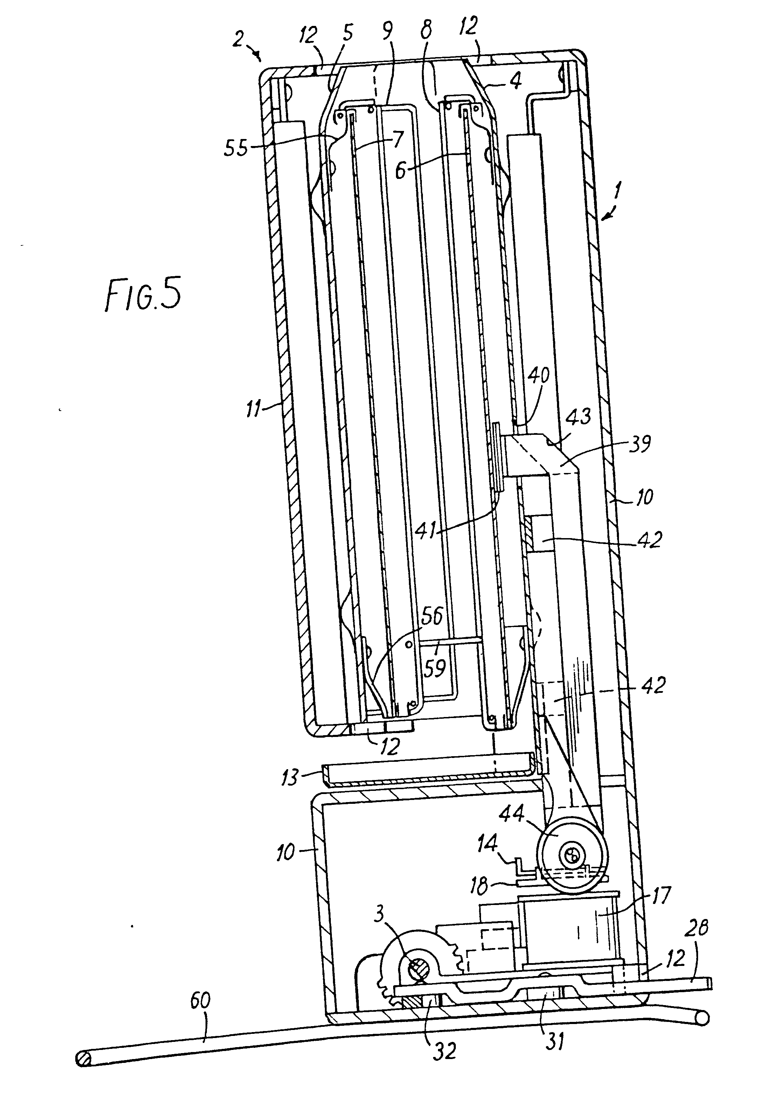

Referring to Figures 1 to 6, the toaster comprises a fixed member 1 and a flap member 2, hinged to the fixed member about shaft 3. Each of the members 1, 2 comprises a respective metal backing plate 4, 5, electric radiant heating element 6, 7 and metal grille 8, 9. An item to be cooked (not shown) is placed between the grilles 8 and 9 when the flap member 2 is in the open position illustrated in Figure 1, and the flap member is then closed to the position shown in Figure 5 to sandwich the item between the grilles. As will be explained hereinafter, closure of the flap member 2 automatically initiates a supply of current to the elements 6, 7 thus commencing the cooking operation. At the completion of cooking the flap member 2 falls away under the influence of gravity to the position shown in Figure 1, whereupon the cooked item can be safely removed. Each of the members 1, 2 is covered by a respective outer cover member 10, 11 which may be made of plastics material. An adequate air flow across the elements and between the backing plates and cover members is ensured by apertures 12. These apertures ensure that the cover members are kept cool during operation of the toaster. A removable tray 13 is provided beneath the cooling area to catch particles of food which drop from items during cooking.

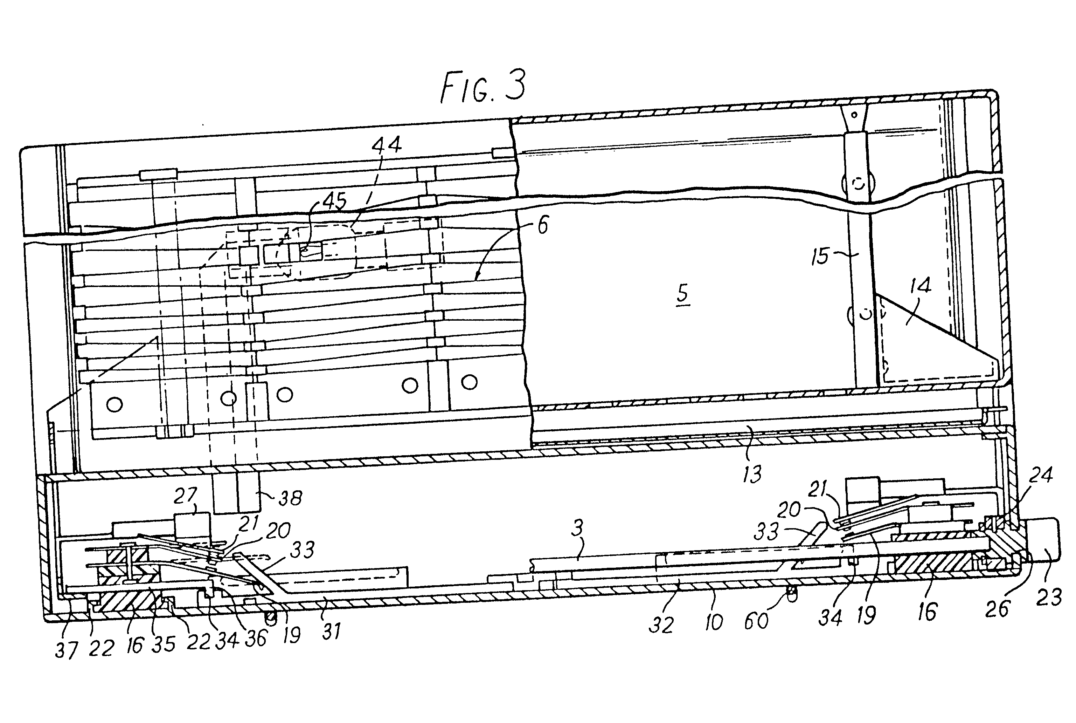

In order that the flap member 1 falls away by gravity to the open position, the member 1 is designed so that its centre of gravity lies behind its line of pivotting i.e. in Figures 3, 4 and 5, to the left of the shaft 3. The main part of the flap member 2, comprising outer cover member 11, backing plate 5, element 7 and grille 9, is pivotally supported on the shaft 3 by means of a pair of attachment members 14 which are shaped as shown in the drawings and which are loosely pivotted about the shaft 3. The attachment members are attached to respective vertical strengthening braces 15 which are attached to the back of the backing plate 5. The backing plate 4 is attached to similar strengthening braces 15 which are themselves attached by means of brackets to the cover member 10.

Also loosely pivotted about the shaft 3 are a pair of mounting blocks 16 of electrically insulating material, for example plastics material. Each block carries a respective electromagnet 17. Each electromagnet 17 comprises a vertical soft iron core and a winding connected to a control circuit (not shown) to be described in detail hereinafter. The electromagnets 17 coact with respective soft iron plates 18 which are loosely held against a horizontal planar portion of each of the attachment members 14 by means of tags which are bent over the planar portion of the respective member 14. The arrangement is such that energisation of the windings of the electromagnets 17 causes the plates 18 to be attracted towards their respective cores with the result that the flap member 2 can be retained in the upright (closed) position. If the windings cease to be energised, the attractive force disappears and the flap member 2 falls away under the action of gravity to the open position.

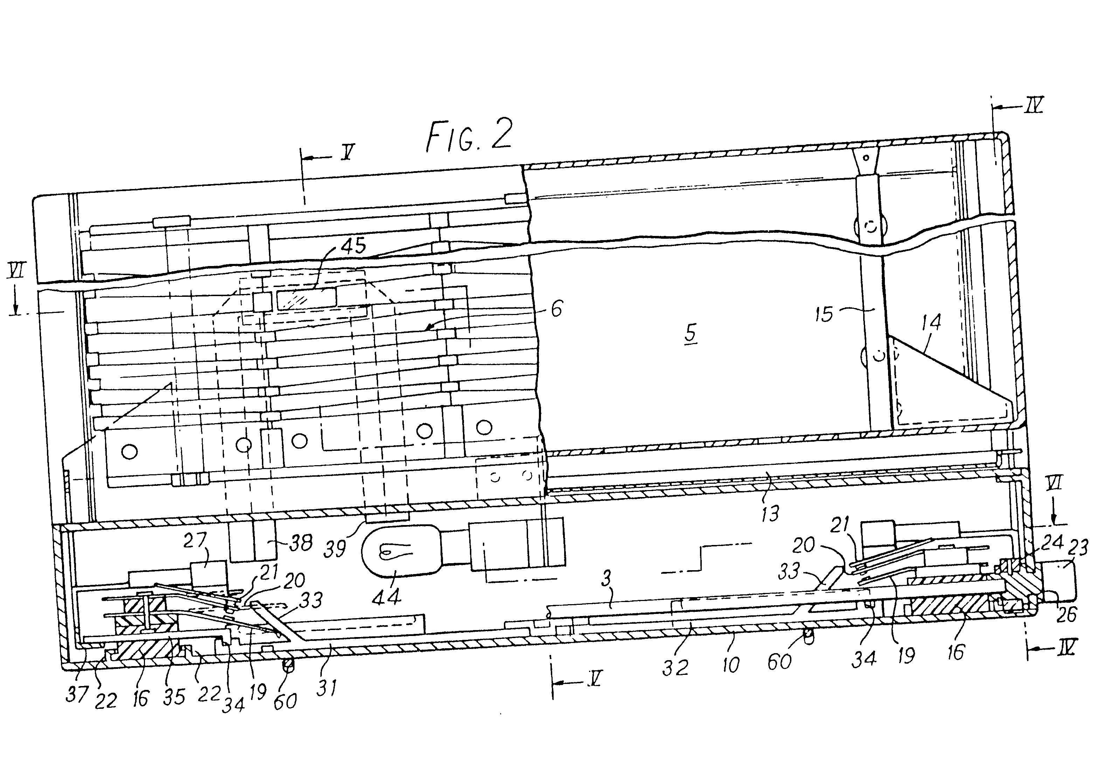

The mounting blocks 16 each also mount a pair of electrical contact elements 19, 20. Each pair of contact elements 19, 20 are normally isolated from one another and coact with a third electrical contact element 21 which is mounted in an insulating bush 27 attached to a respective attachment member 14 for movement with the flap member 2. The contact elements 19 are connected to respective sides of the mains supply while the contacts 20 and 21 are connected to the elements 6 and 7 respectively, the whole assembly thus forming a double pole mains switch controlling the supply of current to the heating elements. When the flap member 2 is in the open position, all three contact elements on each side are spaced from one another, the elements taking up the position shown by full lines in Figures 1 and dotted lines in Figure 2. Thus, in the open position, the electrical supply to the elements is automatically cut off. When the flap member 2 is in the closed position, all three contact elements on each side are pressed together so that electrical contact is made between the three elements. Thus, in the closed position of the flap member, the elements are connected to the mains supply.

Each mounting block 16 is slidably mounted on the bottom of the outer cover member 10 in a pair of runners 22 (see Figure 2), so that the assembly including the mounting blocks 16, flap member 2 and shaft 3 is able to move, as a whole, in a direction transverse to the plane of the fixed member 1. It will be appreciated that such movement will alter the spacing between the grilles when the flap member 2 is in the closed position, thus enabling items of different thicknesses to be cooked.

The spacing between the grilles is adjustable from the exterior of the toaster by rotating a pair of knobs 23 fixedly attached to a respective pinion 24 forming part of a pair of rack and pinion gears. The racks 25 are formed on the bottom of the cover member 10. A pair of elongate slots 26 in the member 10 limit movement of the pinions 24 in each direction. It will be noted that the electromagnets 17 are mounted on the blocks 16 and therefore move therewith, so that the operation of the retaining mechanism for holding the flap member in the closed position is not affected by movement of the blocks 16.

If it is desired to close the flap member when the toaster is not in use a lever 28 may be operated from the exterior of the toaster to mechanically lock the flap member in the closed position. The lever 28, which is made of plastics material, is pivotally mounted on the bottom of the cover member 10 and is linked at respective pivot points 29, 30 with a pair of plastics locking arms 31, 32. Each locking arm 31, 32 is equipped with an angularly extending upstanding portion 33 which is able to bear against the contact element 19 so as to bias it downwards out of electrical contact with the elements 20 and 21. The free end of each of the locking arms 31,32 is formed with a groove 34 extending in a direction transverse to the plane of the fixed member 1. A locking rod 35 slidably mounted in each of the blocks 16 has a bent over end portion 36 which sits in a respective groove 34. The other end of each rod 35 extends beyond the block 16 and is able to latch behind a portion 37 of each of the attachment members 14 to hold the flap member 2 in the closed position.

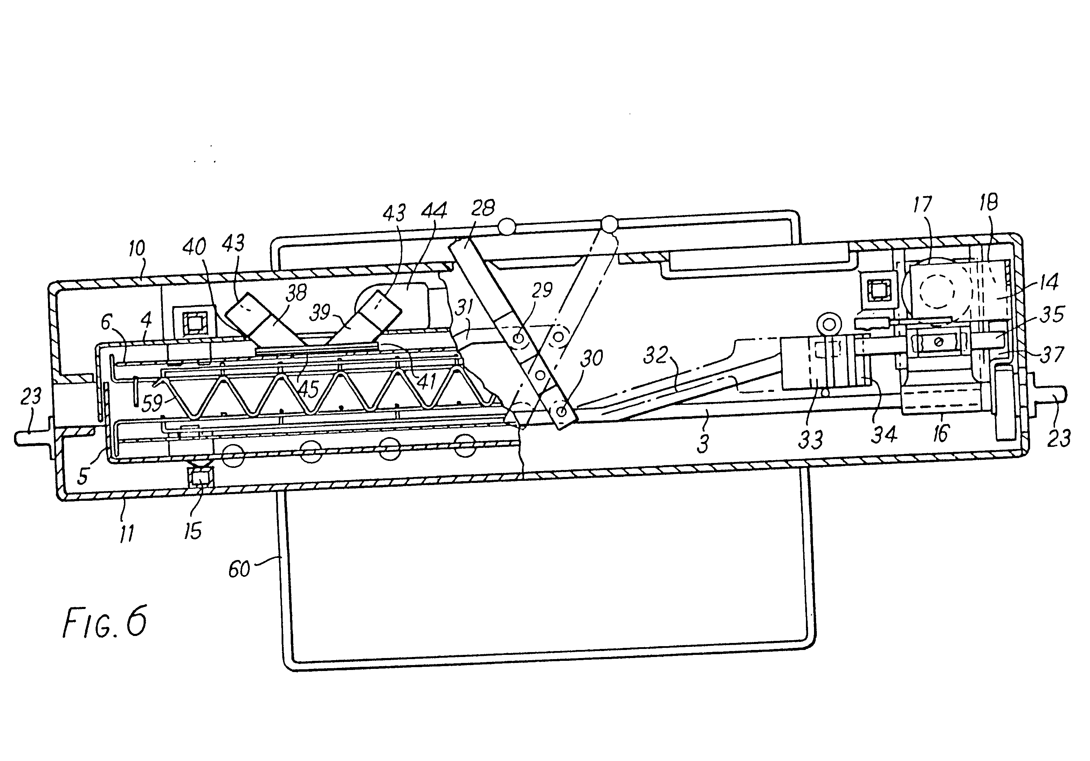

The operation of this mechanical locking mechanism is clearly illustrated in Figures 2 and 6. In the locked position, shown by solid lines in Figures 2 and 6, the lever 28 is pivotted within the confines of the elongate slot 12 provided for it to its anticlockwise position, the upstanding portions 33 bias their respective contact elements 19 downwards, thus ensuring that the mains supply is isolated from the elements, and the locking rods 35 are pushed to their outermost positions thus locking the flap member in the closed position. In the unlocked position, shown by dotted lines in Figure 6, the contact elements 19 are released and the rods 35 are withdrawn, thus allowing the flap member to move freely.

The toaster is equipped with an optical sensing system which detects when the food is cooked and cuts off the supply of current to the electromagnets 17 to allow the flap member 2 to fall open and in turn cut off the supply of current to the elements. Two versions of the optical system are shown in detail in Figures 2, 3, 5 and 6 to which particular references will now be made.

In the first version, shown in Figures 2, 5 and 6 the optical system comprises a pair of rectangular or square section tubes 38, 39 which extend from a position in the lower part of the fixed member 1 behind the backing plate 4 and turn through a right angle at their upper ends, pass through an aperture 40 in the plate 4 and terminate at a position in between the plate 4 and element 6 immediately behind the element.    In practice, the element 6 is slightly biassed against the upper ends of tubes 38 and 39 in order to ensure that movement of the element during heating does not cause the element to move relative to the tubes.    The two tubes meet and are joined together at their upper ends.    The upper end of the tubes is covered by a transparent mica window 41 which prevents foreign matter entering the tubes.    The tubes are attached to the backing plate 4 by means of two brackets 42.    Each of the corners on the tubes 38, 29 is angled off to define a sloping inside surface 43 which is made reflective to ensure that light passing along the tube is reflected around the corner. A rectangular aperture 45 in the element 6 allows light to pass to and from the tubes 38, 39 from the space between the elements 6 and 7.

At the lower end of tube 39, which is open, an incadescent lamp 44 is situated.    The lamp is switched on by closure of the flap member 2, and light from the lamp passes up the tube 39, through the mica window 41 and into the space between the grilles 8 and 9.    If no item  to be cooked is present between the grilles, the light from the lamp 44 is merely absorbed in the element 7 and little or no light is reflected. Any light which is reflected from element 7 passes back towards the element 6 and is incident thereon at a position to the left (in Figure 6) of the upper end of the tube 38. Thus no light passes down the tube 38 if no item to be cooked is present.

If an item to be cooked is present, light from the tube 39 is reflected from the item, provided it has been correctly positioned, back down the tube 38. The spacing between the tubes 38 and 39 and their angular relationship is such that the presence of an item being cooked is detectable by the presence or absence of light in the tube 38. A photocell (not shown) is situated at the lower end of tube 38 which is sealed against the ingress of light from the lower part of the fixed member 1. The photocell is connected to an electronic control circuit (to be described hereinafter) which controls the current passed to the electromagnets 17.

In a second version of the optical system, shown in Figure 3, the tube 39 is omitted and the lamp 44 is positioned directly behind the aperture 45. In this version, light from the lamp shines directly on the item being cooked and this has been found to give better sensitivity.

In operation the control circuit automatically passes current to energise the electromagnets 17 at the moment that closure of the flap member 2 causes the contacts 19, 20 and 21 to be pressed together. The circuit, in response to the amount of light passing down the tube 38, is operable to switch off the current supplied to the electromagnets upon the occurrence of one of the following events.

1. If the flap member 2 is closed without the presence of a correctly positioned item to be cooked between the grilles 8 and 9. Thus it is not possible to accidentally start up the toaster if an item is not present - the flap member merely falls away again as soon as hand pressure is released.    If it is desired to lock
the flap member 2 in the closed position whilst not
in use, it is necessary to operate the lever 28 which
mechanically locks the flap member in the closed position
and simultaneously cuts off the electrical supply to the
element.

2.           If an item is present, but has been cooked to
a desired level.   It will be appreciated that, as the
item cooks, its colour,  and hence the light reflective
properties will change, thus enabling the electronic
circuit to act upon the amount of light received by the
photocell to switch off the electromagnets when a predetermined level of cooking is reached.   It has been
found that there is approximately a 2:1 variation in
the light received by the photocell as between raw and
cooked food.

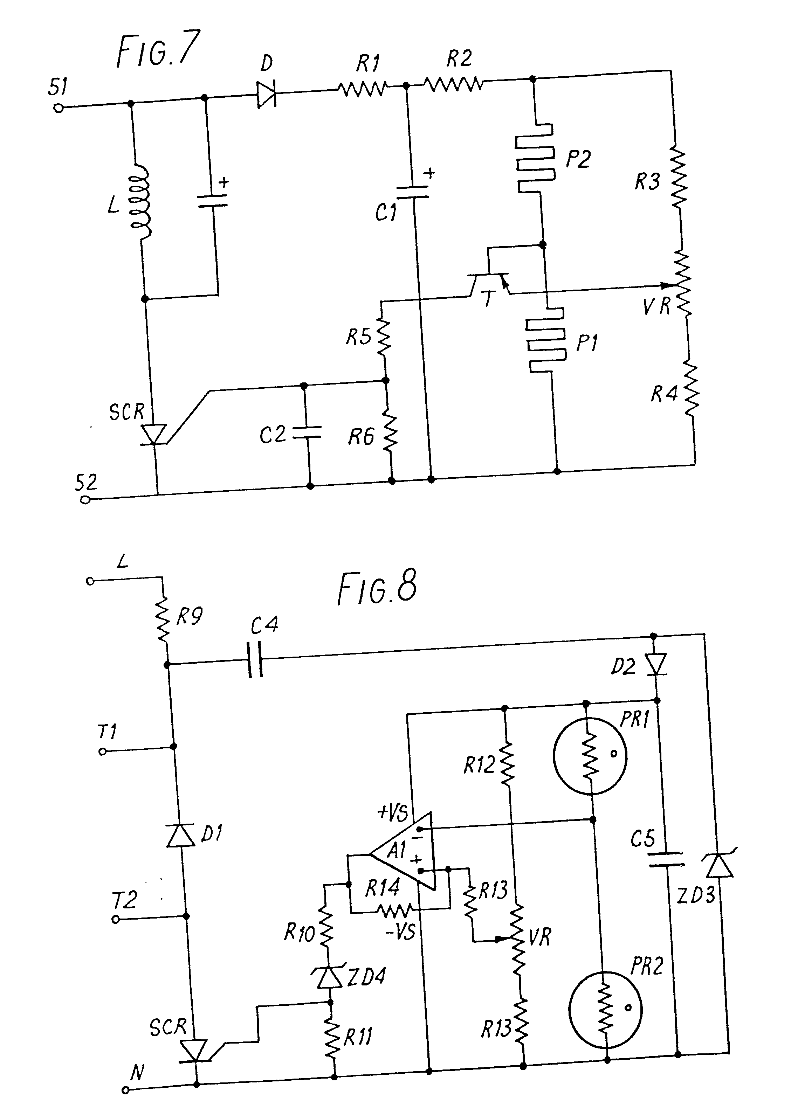

Referring now to Figure 7 there is shown
an electronic control circuit for controlling the current
supply to the electromagnets 17.   The windings of the
two electromagents may be connected in series or in
parallel, and their combination is represented by the
coil L in the drawing.   A power supply for the circuit
is taken from a tapping off one of the heating elements
and is supplied to the terminals 51, 52 of the circuit.
Rectification and smoothing is carried out by the rectifier diode D, resistors R1, R2 and capacitor C1.   The
resistors R1, R2 are adjusted to give a suitable supply
voltage for the circuit.   Current through the coil L
is switched by a silicon controlled recitifier SCR in
the form of a thyristor.   The gate of the thyristor is
controlled by a four-arm bridge circuit containing the photocell situated at the bottom of the tube 38, shown under reference P1, and a reference photocell P2. The photocell P2 is situated in the lower part of the fixed member 1 so as to receive diffuse light direct from the lamp 44. A shutter (not shown) is movable across the photocell P2 to progressively shield the light therefrom. The shutter is preset during manufacture to balance out the amount of light received by the two photocells and so eliminate the effect of tolerance variation between different devices. The remaining two arms of the bridge are constituted by resistors R3, R4 and potentiometer VR. One or both resistors R3, R4 may be preset to allow for adjustment during manufacture of the range covered by potentiometer VR. The output of the bridge circuit is connected to a transistor T whose collector is in turn connected to the gate of thyristor SCR via a current limiting resistor R5. A resistor R6 and capacitor C2 are connected between the gate and cathode of the thyristor in order to prevent accidental latching due to transients.

In operation, the transistor T is normally on, but is eventually switched off due to imbalance in the bridge circuit resulting from a gradual increase in the resistance of photocell P1 as compared with photocell P2 as the item changes colour during cooking. The potentiometer VR is operable from outside the toaster to adjust the point at which the transistor T switches off, thus enabling the amount of cooking for any particular item to be adjusted to suit the user's taste. As long as the transistor T is switched on, the thyristor SCR is also on, thus allowing current to flow through the coil 2 to energise the electromagnets 17 and keep the flap member 2 in the closed position. When the degree of imbalance in the bridge is sufficient to cause transistor T to switch off, the thyristor SCR becomes blocked and cuts off the current throught the coil 2. This causes the electromagnets 17 to become de-energised, and the flap member 2 falls away to its open position. If when the flap member 2 is closed, there is no item present, or the item is incorrectly positioned between the grilles, the photocell P1 receives no light, so its resistance is high and the transistor T, and hence thyristor SCR, remain switched off, thus inhibiting a supply of current to the coil 2.

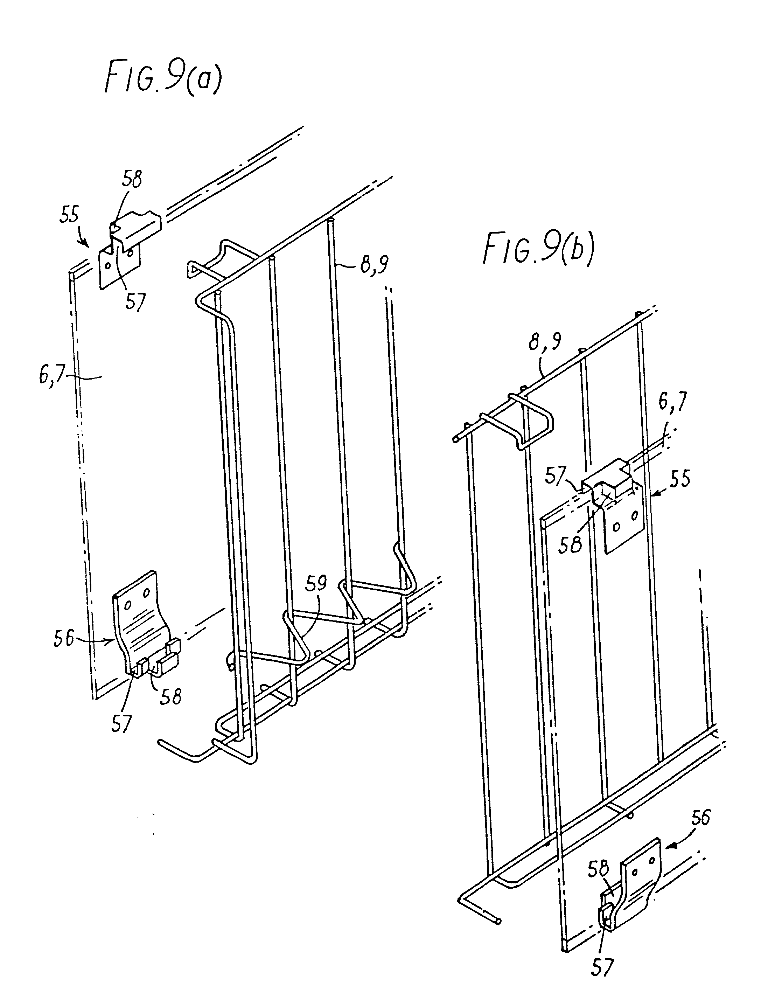

Referring to Figure 8 there is shown an alternative version of the electronic control circuit shown in Figure 7. The photocells P1 and P2 are replaced by photoresistors PR1 and PR2 arranged as two arms of a four arm bridge comprising photoresistors PR1 and PR2 resistors R12 and R13 (corresponding to resistors R2 and R3 in Figure 7), and control potentiometer VR which has the same purpose as hitherto. The output of the bridge is taken to an integrated circuit operational amplifier A1 such as type 741, which provides greater accuracy, lower power requirements when compared to the control circuit of Figure 7, and also provides a more positive "snap" action than the previous circuit. The output of the amplifier A1 controls a silicon controlled rectifier SCR, as before, although a triac may also be used. The zener diode ZD4 ensures that the SCR is positively turned off when the output of amplifier A1 goes low. The windings of the electromagnets 17 are connected

- 21 -

across output terminals T1 and T2 and, when energised, receive a voltage approximately equal to one half the supply voltage

The voltage supply to the circuit and the electromagnet windings is taken from across the live L and neutral N of the mains supply. Resistor R9 acts as a fuse protecting the entire circuit in the event of failure, and limits the peak surge current through a dropper capacitor C4. A zener diode ZD3 ensures a steady d.c. voltage to supply the integrated circuit, and capacitor C5 is a smoothing capacitor.

It will be seen that the circuit of Figure8 is operated directly off the mains supply, thus avoiding the need for a tapping from the heating element. However such a tapping could instead be used to power this circuit. Also, the dropper capacitor C4 could be replaced by a resistor.

In some circumstances, it may be desirable to supply the light source with a lower voltage than the supply to the toaster. Several alternative methods of obtaining lower voltages are possible:-

1. Use a transformer to provide a low voltage supply

2. Half the supply voltage may be provided by half wave rectifying the supply with a single diode, or by utilising the output to the electromagnet windings of Figure 8.

3. The total electromagnetic winding may consist of several individual windings connected in series, with the light source tapped across one or more of the individual windings, or alternatively the light source may be connected in series with the windings.·

4. The heating element may be made in several sections, so that a lower voltage can be obtained across one or more sections.

5. A high current low voltage supply is available by connecting in series with either or both of the heating elements.

6. An electronic regulator can provide a low voltage supply from the incoming supply.

The circuits shown in Figures 7 and 8 may be built on a printed circuit board which is positioned in the lower part of the casing, to the right of the lamp 44 in Figure 2. The reference detector is thus able to receive diffuse light direct from the lamp 44. The movable shutter for adjusting the level of light reaching the reference detector is preferably adjustable by a screwdriver or special tool from the exterior of the toaster. It may be desirable to fabricate the printed circuit board with connections along one edge which will mate up with a conventional p.c.b. edge connector. If the connections are taken from suitable points in the circuit, this will enable initial setting up of the circuit, prior to installation, to be carried out quickly merely by plugging the board into an edge connector connected to a suitable test instrument. It is not envisaged that the edge connector will be used within the toaster itself since this would probably be too expensive, and the connections made along the edge of the board may or may not be used to make connections during subsequent installation of the board.

The construction of the electric heating elements 6, 7 is clearly shown in Figure 2 to which particular reference will now be made. The elements 6 and 7 are identical with the exception of the aperture 45 on the element 6. Each element comprises a sheet of mica in which are formed a plurality of rectangular apertures. The apertures are arranged in vertical lines which are horizontally spaced apart to define areas therebetween over which the resistance wire making up the element is wound. The side edges of the mica are cut away as shown to enable the resistance wire to be securely held at the edges. The resistance wire is wound over the mica in separate horizontally spaced sections, each defined area forming one section. In the embodiment shown in the drawings, each element is made up of five separate sections, electrically connected in series across the mains supply. The splitting up of the element into sections as described above reduces the problem of hot spots occurring when adjacent heating wires come physically close to one another. As is conventional, the spacing between adjacent turns of resistance wire becomes progressivly greater towards the top of the element, in order to ensure an even heat distribution.

Another advantage of the use of sections, is that they provide a convenient tapping off point to supply the electronic circuit of Figure 7. In the present embodiment, the voltage across each section is approximately 50V which is quite suitable for application to the terminals 51, 52.

Referring now particularly to Figure 9, there is shown one method of mounting the elements 6,7 and the grilles 8, 9 on their respective backing plates 4, 5. Each element and grille combination is mounted along its top edge by three top support brackets 55 and along its bottom edge by three bottom support brackets 56. Each of the brackets 55, 56 is shaped as shown in Figure 9 and is attached to the respective backing plate 4, 5 by means of screws or rivets. The brackets 55 are made of flexible material in order to allow the elements and grilles to expand during heating without distortion. As will be clear from the drawing, each bracket 55, 56 is shaped to define a first channel 57 for location of the respective element and a second channel 58 for location of the respective grille.

As shown in Figure 9 (a), one or both of the grilles may be equipped with a zig-zag member 59 for supporting items being cooked.

The toaster as a whole is supported on a rectangular wire frame 60 of metal. The frame 60 is attached to the underside of the cover member 10 and extends outwards from the cover member 10 on the flap member side (see Figure 1). The distance by which the frame 60 extends outwards is calculated in dependence on the position which the flap member 2 takes up when open and is such that the frame 600 extends beyond the outer edge of the flap member 2 in the open position. Thus objects placed close to the toaster will not be struck when the flap member falls, provided they are kept out of the area defined by the frame 60. The frame also acts to balance the assembly to prevent it from tipping over when the flap member 2 falls.

CLAIMS

1        An electric toaster comprising at least one electric heating element, a switch device for controlling the current supply to the element or elements, a control circuit for controlling the switch device to switch off the heater current, a light source for illuminating an item being cooked, a first electronic light detector in the control circuit positioned so as to receive light from said source reflected from the item being cooked, and a second electronic light detector in the control circuit positioned so as to receive light directly from said source.

2        An electric toaster as claimed in claim 1 wherein the first light detector has its maximum sensitivity in the violet or ultra-violet region of the spectrum.

3        An electric toaster as claimed in either one of claims 1 or 2 wherein the light detectors are situated in such a position that they are relatively unaffected by the heat generated thereby, the toaster further including a light guide to guide the light from the item being cooked.

4        An electric toaster as claimed in claim 3 wherein the light detectors are positioned beneath the heating element and the light guide extends from the first detector behind the element and is bent through a right angle to open immediately behind the element.

5        An electric toaster as claimed in claim 4 wherein the end of the guide adjacent the element is protected by a window.

6        An electric toaster as claimed in either one of claims 4 or 5 wherein the light guide takes the form of a hollow tube fitted with mirrors to guide the light therealong.

7        An electric toaster as claimed in any one of the preceding claims wherein the output of the second light detector is passed to a feedback control circuit which is operable to control the output of the light source.

8        An electric toaster as claimed in any one of claims 1 to 6 wherein the control circuit includes means for comparing the output of the two light detectors in order to automatically control the cooking time.

9        An electric heater as claimed in any one of the preceding claims and further comprising a fixed member carrying a first electric radiant heating element, a flap member hinged with respect to the fixed member and carrying a second electric radiant heating element, said flap member being movable between a closed position in which the heating elements are substantially parallel to one another and define therebetween a space in which items to be toasted may be placed and an open position in which the heating elements are disposed at an angle to one another, and means for retaining the flap member in the closed position.

10       An electric toaster as claimed in claim 9 wherein said means for retaining the flap member is operably connected to said control circuit so as to be de-energised to release the flap member when cooking is completed.

11       An electric toaster as claimed in claim 10 wherein said retaining means includes an electromagnet which is connected to the output of said control circuit
in such a way as to be energised during cooking to thereby
retain the flap member in the closed position by magnetism.

12    An electric toaster as claimed in any one
of claims 9 to 11 and further comprising means for moving
the flap member towards and away from the fixed member
in order to accommodate different thicknesses of
item to be cooked.

13    An electric toaster as claimed in any one
of the preceding claims wherein the control circuit
includes means for inhibiting the supply of current to
the heating elements if the toaster is switched on with
no item to be cooked present.

14    An electric toaster as claimed in any one
of the preceding claims wherein the or each heating
element is made up of a plurality of separate windings
wound on a single sheet of insulating material and spaced
apart from each other, said separate windings being
electrically connected in series for connection across
the mains supply.

FIG.1

0033642

FIG. 2

0033642

FIG. 3

FIG.4

0033642

FIG.5

0033642

FIG. 6

0033642

0033642

# FIG.7

51

D   R1   R2

L   C1   +

P2   R3

T   VR

R5   R4

P1

SCR   C2   R6

52

# FIG.8

L

R9   C4

D2

T1   PR1

R12

D1   +VS   A1   -   C5

R14   R13

R10   -VS   VR   ZD3

T2   ZD4

R13   PR2

SCR   R11   R13

N

FIG.9(a)

FIG.9(b)